# EUROPEAN PATENT APPLICATION

(11) **EP 4 509 344 A1**
(43) Date of publication of application: **19.02.2025**
(21) Application number: 24194919.7
(22) Date of filing: 16.08.2024
(51) Int. Cl.: B60K 35/25, B60W 50/16

(54) **A HAPTIC FEEDBACK SYSTEM AND METHOD THEREOF**

(30) Priority: 16.08.2023 IN 202341054780
(71) Applicant: TVS Motor Company Limited, 600006 Chennai (IN)
(72) Inventor: Krishna, Balla Sri Laxmi Veera Venkata Surya Satya Naganjaneya Chaitanya, 600 006 Chennai (IN); Pattabiraman, Venugopalan, 600 006 Chennai (IN); Hariganesh, Sakinala, 600 006 Chennai (IN); Krishna, Balla Vamsi, 600 006 Chennai (IN)
(74) Representative: Patentanwaltskanzlei Matschnig & Forsthuber OG

(57) **Abstract**

The present invention provides a haptic feedback system (200) for a vehicle (100) comprising one or more control units (104), and a plurality of haptic units (102). The one or more control units (104) are configured to actuate the plurality of haptic units (102) based on one or more predefined conditions to provide haptic feedback to a user. The intensity of the haptic feedback of the plurality of haptic units (102) is modulated by the one or more control units (104) based on at least one parameter of the vehicle (100).

## Description

### TECHNICAL FIELD

The present subject matter generally relates to a haptic feedback system and method thereof. More particularly, but not exclusively to a system and method of providing haptic feedback to a user of vehicle.

### BACKGROUND

One of the primary advantages of Electric Vehicles (EVs) is their positive impact on the environment. EVs produce fewer emissions, which means they do not release pollutants like particulate matter during operation. This reduction in emissions helps combat air pollution and greenhouse gas emissions, thereby contributing to mitigating climate change and improving air quality.

In addition to their environmental benefits, EVs offer economic advantages. EVs have lower operating costs compared to Internal Combustion Engine Vehicle (ICEVs), primarily due to the lower cost of electricity compared to gasoline or diesel fuel. Charging an EV is often cheaper per mile travelled compared to refuelling an ICEV. Moreover, EVs have fewer moving parts, resulting in reduced maintenance and repair costs over the vehicle's lifetime.

Hybrid Electric Vehicles (HEVs) offer a transitionary step towards electrification by combining the benefits of electric propulsion with the convenience and range of conventional internal combustion engines. They provide improved fuel efficiency, reduced emissions, and enhanced performance, making them a practical choice for individuals.

Furthermore, electric vehicles and hybrid vehicles contribute to a quieter and more peaceful urban environment. Unlike ICEVs, EVs and HEVs operate almost silently due to their electric motors. This characteristic reduces noise pollution in urban areas, creating a more pleasant living environment for residents and minimizing the impact on wildlife and natural habitats.

While reduced noise pollution is considered a positive aspect of electric vehicles and hybrid vehicles, it can create safety concerns for individuals who rely on auditory and sensory cues to detect the key on state, presence and movement of vehicles. The absence of engine noise from EVs/HEVs can make them less noticeable and potentially increase the risk of accidents, especially in urban environments or during operation of the vehicle. Additionally, in case of four-wheeler or multi-axle HEVs, due to the user of the vehicle being inside a closed cabin, it is very difficult for a user to determine whether the vehicle is in ON state or OFF state.

Engine noise in conventional vehicles provides valuable feedback to users of the vehicle. Changes in engine sound can indicate the vehicle's acceleration, deceleration, and overall performance. This feedback helps users make informed decisions about shifting gears, adjusting speed, and assessing the vehicle's condition.

In EVs/HEVs, the absence of engine noise can result in reduced feedback, making it harder for users to gauge their driving behaviour and vehicle status. The absence of familiar engine noises can give the impression of a different driving experience, which can feel unusual or unfamiliar to some users which are new to the EV. Additionally, EVs/HEVs usually are very high in torque and a large amount of torque is available as soon as the ignition is turned on, therefore it becomes very difficult for the user to control the vehicle in the absence of feedback from the vehicle to the user.

Engine noises can also provide situational awareness cues for users. Without these cues, users may need to rely more heavily on visual cues which can cause distractions to the user and make it difficult to maintain situational awareness on the road.

Some users may have become accustomed to the hum or vibrations of an internal combustion engine, which can have a calming or relaxing effect during driving. The absence of this noise in the vehicles may alter the driving experience for those who found the engine noise soothing, potentially requiring a different adjustment to achieve a similar level of comfort during driving. Such an absence in feedback regarding vehicle's ignition state, or the speed can cause anxiety in the user, creating additional distractions for them and degrading their driving experience.

EVs and HEVs start silently, which can be a departure from the familiar sound and tactile feedback provided by the ignition systems in conventional internal combustion engine vehicles. Some users find it disconcerting or may take time to adjust to the lack of engine noise during the ignition process. In many EVs/HEVs, the ignition process involves simply pressing a button or engaging a switch to start or turn off the vehicle, eliminating the need for physically turning a key. While this can be convenient, users who are accustomed to the tactile action of turning a key find the absence of this mechanism unusual.

In EVs, the lack of engine noise can make it more difficult for users to immediately confirm whether the vehicle has properly started or shut down. This requires users to rely more on visual indicators, such as dashboard displays, to ensure the vehicle's ignition status. Such visual indicators, in turn lead to distracting the user's attention from the road and traffic, which might lead to adverse situations.

With the quiet operation of EVs/HEVs, there is a potential risk of users forgetting to turn off the vehicle when they exit. Leaving the vehicle unattended with ignition turned on can lead to hazardous situations. In conventional vehicles, the sound of an idling engine can serve as a reminder/feedback to turn off the vehicle before leaving. However, the absence of engine noise may make it easier for users to unintentionally leave the vehicle running, potentially leading to battery depletion and reduced range.

The absence of engine noise can sometimes make it difficult for users to accurately perceive the speed of the vehicle. In EVs and HEVs, it is increasingly difficult to determine the accurately perceive the speed when the speed is less, and the vehicle is being driven slowly. In conventional vehicles, the sound of the engine and the corresponding increase in noise level provide a sensory cue that correlates with the speed of the vehicle. Without this feedback, users may need to rely more on visual cues, such as speedometer readings or roadside landmarks, to gauge their speed accurately.

Thus, there is a need in the art for a method and a system for haptic feedback in a vehicle which addresses at least the aforementioned problems and other problems of known art.

Further limitations and disadvantages of conventional and traditional approaches will become apparent to one of skill in the art, through comparison of described systems with some aspects of the present disclosure, as set forth in the remainder of the present application and with reference to the drawings.

### SUMMARY OF THE INVENTION

According to embodiments illustrated herein, the present invention provides a system and method for providing a haptic feedback to a user of a vehicle.

The present invention provides a haptic feedback system for a vehicle comprising one or more control units, and a plurality of haptic units. The one or more control units are configured to actuate the plurality of haptic units based on one or more predefined conditions to provide haptic feedback to a user. The intensity of the haptic feedback of the plurality of haptic units is modulated by the one or more control units based on at least one parameter of the vehicle.

According to embodiments illustrated herein the present invention further provides a vehicle which comprises of a plurality of haptic units, a haptic feedback system. The plurality of haptic units are mounted in a plurality of predefined locations of the vehicle. The haptic feedback system which comprises of one or more control units. The one or more control units are configured to actuate the plurality of haptic units based on one or more predefined conditions to provide haptic feedback to a user. The intensity of haptic feedback of the plurality of haptic units are modulated by the one or more control units based on at least one parameter of the vehicle. The display unit of the vehicle is configured to display the intensity of haptic feedback produced by the plurality of haptic units and the at least one parameter of the vehicle to notify the user.

According to embodiments illustrated herein the present invention further provides a method of providing haptic feedback to a user of a vehicle through a haptic feedback system. The method comprises the steps of actuating a plurality of haptic units based on one or more predefined conditions by one or more control units to provide haptic feedback to a user. Further, modulating intensity of haptic feedback produced by the plurality of haptic units by the one or more control units based on at least one parameter of the vehicle. The intensity of the haptic feedback produced by the plurality of haptic units is according to a non-linear function to the at least one parameter of the vehicle. The non-linear function comprises an inverse parabolic function. Furthermore, controlling input current to the plurality of haptic units for modulating the intensity of haptic feedback produced by the plurality of haptic units based on the at least one parameter of the vehicle.

It is to be understood that both the foregoing general description and the following detailed description are exemplary and explanatory only and are not restrictive of the invention, as claimed.

### BRIEF DESCRIPTION OF THE DRAWINGS

The details are described with reference to an embodiment of a haptic feedback system and method of providing the haptic feedback to a user of a vehicle along with the accompanying diagrams. The same numbers are used throughout the drawings to reference similar features and components.
Figure 1 exemplarily illustrates a block diagram illustrating the communication between various components in accordance with an embodiment of the present disclosure.
Figure 2 exemplarily illustrates a vehicle indicating plurality of predefined locations in accordance with an embodiment of the present disclosure.
Figure 3 exemplarily illustrates a flowchart indicating a method of providing haptic feedback to a user of the vehicle in accordance with an embodiment of the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

An objective of the present subject matter is to provides aid to individuals who rely on auditory and sensory cues to detect the presence and movement of vehicles. The present subject matter provides an alternative to engine noise that is absent from EVs/HEVs which can make them less noticeable and potentially increase the risk of accidents, especially in urban environments or during operation of the vehicle.

Another object of the present subject matter is to provide valuable feedback to users of the vehicle that indicate the vehicle's acceleration, deceleration, and overall performance. This feedback helps users make informed decisions about shifting gears, adjusting speed, and assessing the vehicle's condition.

Another object of the present subject matter is to give a user of the vehicle a familiar haptic feedback which can give a more usual and familiar driving experience.

Additionally, the present invention provides safety to users as the EVs and HEVs usually are very high in torque and a large amount of torque is available as soon as the ignition is turned on, therefore it becomes very difficult for the user to control the vehicle in the absence of feedback from the vehicle to the user. By providing such feedback, the user is safeguarded from such adverse situations.

Another object of the present subject matter is to provide users with auditory and sensory cues, thereby ensuring that the user does not have to rely more heavily on visual cues which can cause distractions to the user and make it difficult to maintain situational awareness on the road.

Another object of the present subject matter is to provide users with an alternative to the hum or vibrations of an internal combustion engine, in turn giving them a calming or relaxing effect during driving. The presence of such haptic feedback in the noiseless vehicles provides better driving experience for those who found the engine noise soothing, potentially achieving a similar level of comfort during driving.

Another object of the present subject matter is to ensure that the user is made aware and confirm whether the vehicle has properly started or shut down. Therefore, this eliminates the need for the users to rely more on visual indicators, such as dashboard displays, to ensure the vehicle's ignition status. Such visual indicators, in turn lead to distracting the user's attention from the road and traffic, which might lead to adverse situations.

Another object of the present subject matter is to provide haptic feedback to the users to accurately perceive the speed of the vehicle. The corresponding change in the haptic feedback system provides a sensory cue that correlates with the speed of the vehicle. Therefore, the users do not need to rely more on visual cues, such as speedometer readings or roadside landmarks, to gauge their speed accurately.

Therefore, the risks of leaving the vehicle unattended with ignition turned on is eliminated, and similar and familiar feel of an idling engine is provided to serve as a reminder to turn off the vehicle before leaving, thereby potentially eliminating hazardous situations, the risk of battery depletion and reduced range of the vehicle.

As per an aspect of the present subject matter, a haptic feedback system for a vehicle comprising one or more control units, and a plurality of haptic units. The one or more control units are configured to actuate the plurality of haptic units based on one or more predefined conditions to provide haptic feedback to a user. The intensity of the haptic feedback of the plurality of haptic units is modulated by the one or more control units based on at least one parameter of the vehicle. The varying intensity based on the at least one parameter of the vehicle enables the user to gauge the changes in that indicate the vehicle's acceleration, deceleration, and performance. This feedback helps users make informed decisions about shifting gears, adjusting speed, and assessing the vehicle's condition. The modulation of intensity of the haptic feedback of the plurality of haptic units refers to the variation and change in the intensity or strength of tactile and haptic feedback. Such modulation of haptic feedback strength creates a more immersive and realistic experiences while operating a noiseless vehicle.

In an embodiment, the plurality of haptic units comprising at least one unbalanced motor. In another embodiment, the plurality of haptic units comprise a micro DC unbalanced motor, used for their low cost and compact structure. Thereby, such additional motors are easy to assemble and mount on the vehicle. Due to the unbalanced nature of the motor, the plurality of haptic units are enabled to produce more haptic feedback with low input current, thereby ensuring that additional batteries and power sources are not required.

As per an aspect of the present subject matter, the one or more predefined conditions are at least an ignition ON condition or key ON condition of the vehicle, and a revolutions per minute of the vehicle being more than zero. Therefore, such a haptic feedback system will start functioning when the vehicle is ON and being operated.

As per another aspect of the present subject matter, the at least one parameter of the vehicle is a speed of the vehicle. Therefore, the intensity of haptic feedback produced by the plurality of haptic units is based on the speed of the vehicle increases. Similarly, the intensity of haptic feedback produced by the plurality of haptic units may be dependent on several other parameters of the vehicle such as torque of the vehicle, acceleration of the vehicle, fuel level of the vehicle, and the like.

As per another aspect of the present subject matter, the one or more control units are configured to control input current to the plurality of haptic units for modulating the intensity of haptic feedback produced by the plurality of haptic units based on the at least one parameter of the vehicle. The intensity may also be varied by adjusting parameters such as amplitude, frequency, duty cycle, waveform, actuator design, and user settings. Therefore, the haptic feedback can be tailored to meet specific requirements and user preferences.

As per another aspect of the present subject matter, the intensity of haptic feedback produced by the plurality of haptic units is according to a non-linear function to the at least one parameter of the vehicle. In the present application, the haptic feedback is utilized being a function of non-linear function helps in creating a varying and dynamic sensory experience. The non-linear function is utilized to model non-linear effects of the at least one parameter of the vehicle and simulate the sensory cues of increase and decrease in the at least one parameter of the vehicle. Therefore, the non-linear function maps specific input values to corresponding haptic feedback intensities.

For example, in EVs and HEVs, as the speed increases, the user begins to sense the natural excitations that are produced due to the increase in speed. Therefore, in the present invention, the haptic feedback of the plurality of haptic units will decrease as the at least one parameter of the vehicle increases, which in an embodiment is the speed of the vehicle. As the speed of the vehicle increases and the natural excitations of the vehicles are felt, the plurality of haptic units will produce a lesser intensity of haptic feedback. To enable this, in an embodiment, the non-linear function comprises an inverse parabolic function. In an embodiment, the plurality of haptic units will not produce any haptic feedback above a predefined speed of the vehicle.

As per another aspect of the present subject matter, the present invention provides a vehicle which comprises of a plurality of haptic units, a haptic feedback system, and a display unit. The plurality of haptic units are mounted in a plurality of predefined locations of the vehicle. The haptic feedback system which comprises of one or more control units. The one or more control units are configured to actuate the plurality of haptic units based on one or more predefined conditions to provide haptic feedback to a user. The intensity of haptic feedback of the plurality of haptic units are modulated by the one or more control units based on at least one parameter of the vehicle. The display unit of the vehicle is configured to display the intensity of haptic feedback produced by the plurality of haptic units and the at least one parameter of the vehicle to notify the user. The modulation of intensity of the haptic feedback of the plurality of haptic units refers to the variation and change in the intensity or strength of tactile and haptic feedback. Such modulation of haptic feedback strength creates a more immersive and realistic experiences while operating a noiseless vehicle. Additionally, the at least one parameter of the vehicle as well as the intensity of haptic feedback of the plurality of haptic units may be displayed on the display unit to inform the user via visual cues. In an embodiment, the display unit can also provide auditory signals and provide audio cues to the user informing them of the at least one parameter of the vehicle and the intensity of haptic feedback of the plurality of haptic units. The display unit may also be a cluster of the vehicle, or an infotainment unit of the vehicle, or the like.

As per another aspect of the present subject matter, the plurality of predefined locations are in direct contact with the user of the vehicle. The mounting of the plurality of haptic units in these predefined location of the vehicle enable the user to feel the haptic feedback produced directly and precisely. The plurality of predefined locations being at least a steering mechanism, a seat, a dashboard, a floorboard, one or more pedals. In an embodiment, the steering mechanism comprises a handlebar with a pair of grip portions on at each ends of the handlebar, or a steering wheel. The plurality of haptic units are mounted in at least these predefined locations of the vehicle due to these predefined locations of the vehicle being in constant and direct contact with the user of the vehicle. Therefore, such mounting in predefined locations enables fewer use of components and achieving efficient transfer of the haptic feedback from the plurality of haptic units to the user directly. As per another aspect of the present subject matter, the plurality of haptic units comprising a first set of plurality of haptic units and a second set of plurality of haptic units.

As per another aspect of the present subject matter, the first set of plurality of haptic units are actuated based on a mode of the vehicle.

As per another aspect of the present subject matters, a second set of the plurality of haptic units are deactivated based on a riding mode of the vehicle.

As per another aspect of the present subject matters, the first set of plurality of haptic units and the second set of plurality of haptic units being selected based on proximity of the plurality of haptic units from a driver of the vehicle. The first set of plurality of haptic units being closer to the driver of the vehicle. The second set of plurality of haptic units being farther away from the driver and closer to the passenger or the pillion of the vehicle.

The first set and the second set of plurality of haptic units may be selected based on proximity of the plurality of haptic units from a driver of the vehicle. In an embodiment, the mode of the vehicle being an energy saving mode. Therefore, if the vehicle is the energy saving mode, the plurality of haptic units that are closest to a driver of the vehicle will be activated, thereby saving power and battery consumption. A passenger or a pillion rider are not necessarily required to feel the haptic feedback produced by the plurality of haptic units, in some cases they might want to opt out of such experience and ride a comfortable and quiet ride. Therefore, as per the user's convenience, the plurality of haptic units that are closer to the driver of the vehicle will only be the receiver of such haptic feedback. A mode change of the vehicle may enable such a feature of the present invention.

As per another aspect of the present subject matter, the plurality of haptic units used in the vehicle provided by the present invention comprises at least one unbalanced motor. In another embodiment, the plurality of haptic units comprise a micro DC unbalanced motor, used for their low cost and compact structure. Thereby, such additional motors are easy to assemble and mount on the vehicle. Due to the unbalanced nature of the motor, the plurality of haptic units are enabled to produce more haptic feedback with low input current, thereby ensuring that additional batteries and power sources are not required.

As per an aspect of the present subject matter, the one or more predefined conditions are at least an ignition ON condition or key ON condition of the vehicle, and a revolutions per minute of the vehicle being more than zero. Therefore, such a haptic feedback system will start functioning when the vehicle is ON and being operated.

As per another aspect of the present subject matter, the at least one parameter of the vehicle is a speed of the vehicle. Therefore, the intensity of haptic feedback produced by the plurality of haptic units is based on the speed of the vehicle increases. Similarly, the intensity of haptic feedback produced by the plurality of haptic units may be dependent on several other parameters of the vehicle such as torque of the vehicle, acceleration of the vehicle, fuel level of the vehicle, and the like.

As per another aspect of the present subject matter, the one or more control units are configured to control input current to the plurality of haptic units for modulating the intensity of haptic feedback produced by the plurality of haptic units based on the at least one parameter of the vehicle. The intensity may also be varied by adjusting parameters such as amplitude, frequency, duty cycle, waveform, actuator design, and user settings. Therefore, the haptic feedback can be tailored to meet specific requirements and user preferences.

As per an aspect of the present subject matter, the one or more control units may comprise of vehicle control unit, an engine control unit, and a motor control unit. In an embodiment, a separate control unit may be provided to control the aspects of the plurality of haptic units as provided in the present invention. Such a separate control unit will enable retrofitting of the haptic feedback system claimed in the present invention in the existing vehicle, without implementing any substantial or significant changes in the vehicle.

As per another aspect of the present subject matter, the intensity of haptic feedback produced by the plurality of haptic units is according to a non-linear function to the at least one parameter of the vehicle. In the present application, the haptic feedback is utilized being a function of non-linear function helps in creating a varying and dynamic sensory experience. The non-linear function is utilized to model non-linear effects of the at least one parameter of the vehicle and simulate the sensory cues of increase and decrease in the at least one parameter of the vehicle. Therefore, the non-linear function maps specific input values to corresponding haptic feedback intensities.

For example, in EVs and HEVs, as the speed increases, the user begins to sense the natural excitations that are produced due to the increase in speed. Therefore, in the present invention, the haptic feedback of the plurality of haptic units will decrease as the at least one parameter of the vehicle increases, which in an embodiment is the speed of the vehicle. As the speed of the vehicle increases and the natural excitations of the vehicles are felt, the plurality of haptic units will produce a lesser intensity of haptic feedback. To enable this, in an embodiment, the non-linear function comprises an inverse parabolic function.

As per an aspect of the present subject matter, the present invention further provides a method of providing haptic feedback to a user of a vehicle through a haptic feedback system. The method comprises the steps of actuating a plurality of haptic units based on one or more predefined conditions by one or more control units to provide haptic feedback to a user. Further, modulating intensity of haptic feedback produced by the plurality of haptic units by the one or more control units based on at least one parameter of the vehicle. The intensity of the haptic feedback produced by the plurality of haptic units is according to a non-linear function to the at least one parameter of the vehicle. The non-linear function comprises an inverse parabolic function. Furthermore, controlling input current to the plurality of haptic units for modulating the intensity of haptic feedback produced by the plurality of haptic units based on the at least one parameter of the vehicle.

As per another aspect of the present subject matter, the method comprising steps of displaying the intensity of haptic feedback produced by the plurality of haptic units and the at least one parameter of the vehicle on a display unit to notify the user. The at least one parameter of the vehicle as well as the intensity of haptic feedback of the plurality of haptic units may be displayed on the display unit to inform the user via visual cues. In an embodiment, the display unit can also provide auditory signals and provide audio cues to the user informing them of the at least one parameter of the vehicle and the intensity of haptic feedback of the plurality of haptic units. The display unit may also be a cluster of the vehicle, or an infotainment unit of the vehicle, or the like.

As per another aspect of the present subject matter, the method comprising steps of detecting a mode of the vehicle by the one or more control units and actuating a first set of plurality of haptic units based on the detection. As per another aspect of the present subject matters, a second set of the plurality of haptic units being deactivated based on a riding mode of the vehicle. The mode of the vehicle comprising at least a sports mode, a power saving mode, a battery saving mode.

As per another aspect of the present subject matters, the first set and the second set of plurality of haptic units being selected based on proximity of the plurality of haptic units from a driver of the vehicle.

The set of plurality of haptic units are selected based on proximity of the plurality of haptic units from a driver of the vehicle. Therefore, if the vehicle is the energy saving mode, the plurality of haptic units that are closest to a driver of the vehicle will be activated, thereby saving power and battery consumption. A passenger or a pillion rider are not necessarily required to feel the haptic feedback produced by the plurality of haptic units, in some cases they might want to opt out of such experience and ride a comfortable and quiet ride. Therefore, as per the user's convenience, the plurality of haptic units that are closer to the driver of the vehicle will only be the receiver of such haptic feedback. A mode change of the vehicle may enable such a feature of the present invention.

As per another aspect of the present subject matter, the plurality of haptic units used in the vehicle provided by the present invention comprises at least one unbalanced motor. In another embodiment, the plurality of haptic units comprise a micro DC unbalanced motor, used for their low cost and compact structure. Thereby, such additional motors are easy to assemble and mount on the vehicle. Due to the unbalanced nature of the motor, the plurality of haptic units are enabled to produce more haptic feedback with low input current, thereby ensuring that additional batteries and power sources are not required.

As per an aspect of the present subject matter, the one or more predefined conditions are at least an ignition ON condition or key ON condition of the vehicle, and a revolutions per minute of the vehicle being more than zero. Therefore, such a haptic feedback system will start functioning when the vehicle is ON and being operated.

As per another aspect of the present subject matter, the at least one parameter of the vehicle is a speed of the vehicle. Therefore, the intensity of haptic feedback produced by the plurality of haptic units is based on the speed of the vehicle increases. Similarly, the intensity of haptic feedback produced by the plurality of haptic units may be dependent on several other parameters of the vehicle such as torque of the vehicle, acceleration of the vehicle, fuel level of the vehicle, and the like.

The present invention eliminates the dangers and safety concerns for individuals who rely on auditory and sensory cues to detect the presence and movement of vehicles. The present inventio provides an alternative to the absence of engine noise from EVs/HEVs which makes the vehicles less noticeable and potentially increase the risk of accidents, especially in urban environments or during operation of the vehicle.

In view of the above, the claimed limitations as discussed above are not routine, conventional, or well understood in the art, as the claimed limitations enable the above solutions to the existing problems in conventional technologies. The present invention provides valuable feedback to users of the vehicle that indicate the vehicle's acceleration, deceleration, and overall performance. This feedback helps users make informed decisions about shifting gears, adjusting speed, and assessing the vehicle's condition.

The present subject matter is described using a haptic feedback system which is used in a vehicle, whereas the claimed subject matter can be used in any other type of application employing above-mentioned haptic feedback system, with required changes and without deviating from the scope of invention. Further, it is intended that the disclosure and examples given herein be considered as exemplary only.

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise. The terms "including", "comprising", "having" and variations thereof mean "including but not limited to", unless expressly specified otherwise. The terms "a", "an" and "the" mean "one or more", unless expressly specified otherwise.

The embodiments of the present invention will now be described in detail with reference to a haptic feedback system for a vehicle and method thereof, with the accompanying drawings. However, the present invention is not limited to the present embodiments. The present subject matter is further described with reference to accompanying figures. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

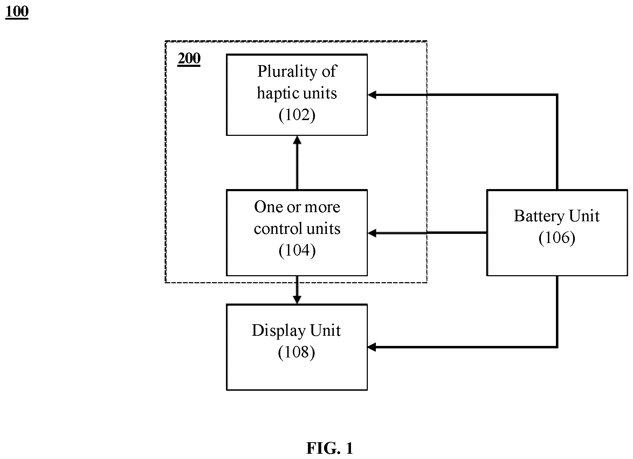

**Figure 1** exemplarily illustrates a block diagram illustrating the communication between various components of what ??? in accordance with an embodiment of the present disclosure. The present invention provides a haptic feedback system (200) for a vehicle (100) comprising one or more control units (104) and a plurality of haptic units (102). The one or more control units (104) are configured to actuate the plurality of haptic units (102) based on one or more predefined conditions to provide haptic feedback to a user. An intensity of the haptic feedback of the plurality of haptic units (102) is modulated by the one or more control units (104) based on at least one parameter of the vehicle (100). The modulation of intensity of the haptic feedback of the plurality of haptic units (102) refers to the variation and change in the intensity or strength of tactile and haptic feedback, for example for vibrating units, the intensity of vibration will be modulated. Such modulation of haptic feedback strength creates a more immersive and realistic experiences while operating a noiseless vehicle. The one or more control units (104) are powered by a battery unit (106). In one of the embodiments, the battery unit (106) may be an auxiliary power source of a vehicle (100). In one of the embodiments, the battery unit may also be a secondary power source of a vehicle (100), an independent power source for the one or more control units (104), or the like. The one or more control units (104) are communicably connected to a display unit (108). This display unit (108) is configured to display the intensity of haptic feedback produced by the plurality of haptic units (102) and the at least one parameter of the vehicle (100) to notify the user. The user is clearly notified and informed of the intensity of the haptic feedback produced by the plurality of haptic units (102) and the at least one parameter of the vehicle (100) for example, torque of the vehicle (100), acceleration of the vehicle (100), fuel level of the vehicle (100), and the like. Another example would be, if the intensity of the haptic feedback of the plurality of haptic units (102) is being modulated based on the acceleration of the vehicle (100), the Additionally, the at least one parameter of the vehicle (100) as well as the intensity of haptic feedback of the plurality of haptic units (102) may be displayed on the display unit (108) to inform the user via visual cues. In an embodiment, the display unit (108) can also provide auditory signals and provide audio cues to the user informing them of the at least one parameter of the vehicle (100) and the intensity of haptic feedback of the plurality of haptic units (102). In an embodiment, the plurality of haptic units (102) comprises at least one unbalanced motor. The display unit (108) may also be a cluster of the vehicle (100), or an infotainment unit of the vehicle (100). The one or more predefined conditions are at least an ignition ON condition of the vehicle (100) or key ON condition of the vehicle (100), and a Revolutions Per Minute (RPM) of the vehicle (100) being more than zero. The at least one parameter of the vehicle (100) is a speed of the vehicle (100). However, in other embodiments, the at least one parameter of the vehicle (100) may be a torque of the vehicle (100), acceleration of the vehicle (100), fuel level of the vehicle (100), and the like.

The one or more control units (104) are configured to control input current to the plurality of haptic units (102) for modulating the intensity of haptic feedback produced by the plurality of haptic units (102), based on the at least one parameter of the vehicle (100). The intensity of haptic feedback produced by the plurality of haptic units (102) is according to a non-linear function to the at least one parameter of the vehicle (100). In an embodiment, the non-linear function comprises an inverse parabolic function. The one or more control units (104) may comprise of vehicle control unit, an engine control unit, and a motor control unit.

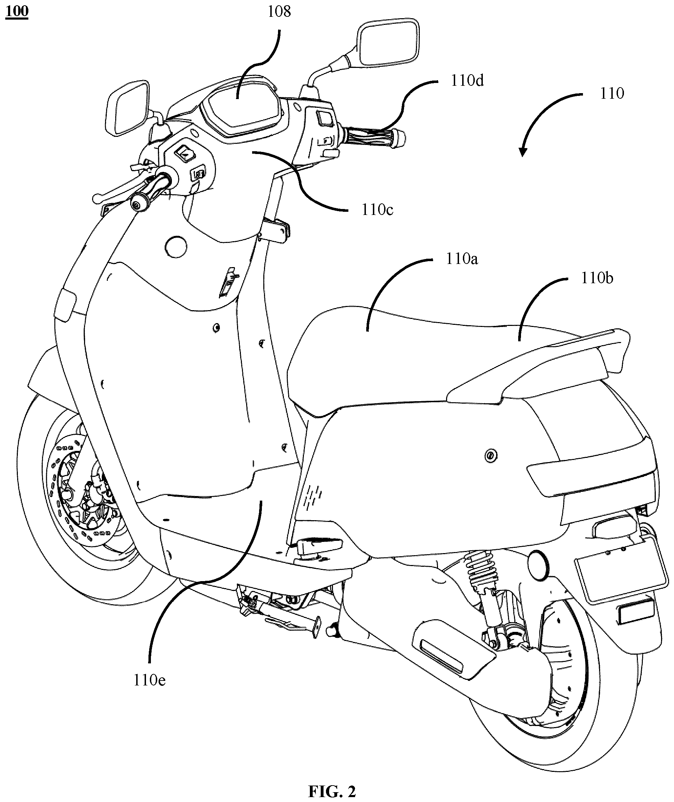

**Figure 2** exemplarily illustrates a vehicle (100) indicating plurality of predefined locations in accordance with an embodiment of the present disclosure. The plurality of predefined locations (110) are in direct contact with the user of the vehicle (100). The mounting of the plurality of haptic units (102) in these predefined location of the vehicle (100) enables the user to feel the haptic feedback produced directly and precisely. The plurality of predefined locations (110) being at least a steering mechanism (110d), a driver seat (1 10a), a commuter seat (1 10b), a dashboard (110c), a floorboard (110e), one or more pedals, in case of three-wheeler, four-wheeler, or multi-axel vehicle (not shown). In an embodiment, the steering mechanism (110d) comprises a handlebar with a pair of grip portions on at each ends of the handlebar (1 10d), or a steering wheel, in case of three-wheeler, four-wheeler, or multi-axel vehicle (not shown). The plurality of haptic units (102) are mounted in at least these predefined locations (110) of the vehicle (100) due to these predefined locations (110) of the vehicle (100) is in constant and direct contact with the user of the vehicle (100). Therefore, such mounting in predefined locations (110) enables fewer use of components and achieving efficient transfer of the haptic feedback from the plurality of haptic units (102) to the user directly.

The plurality of haptic units (102) comprising a first set of plurality of haptic units and a second set of plurality of haptic units, the first set of plurality of haptic units are actuated based on a mode of the vehicle. A second set of the plurality of haptic units are deactivated based on a riding mode of the vehicle. The first set of plurality of haptic units and the second set of plurality of haptic units being selected based on proximity of the plurality of haptic units from a driver of the vehicle. The first set of plurality of haptic units being closer to the driver of the vehicle. The second set of plurality of haptic units being farther away from the driver and closer to the passenger or the pillion of the vehicle.

In an embodiment of the present application, in the battery saving riding mode of the vehicle a first set and a second set of plurality of haptic units (102) such as the driver seat (110a), the steering mechanism (110d) or the like points which are directly in contact with the rider will be activated, however, the haptic unit placed over the commuter seat (1 10b), the dashboard (110c) will be deactivated. The driver of the vehicle would be seated on the driver seat and would be in control of the vehicle, therefore, the driver is at higher priority to receive haptic feedback. The user of the vehicle would also include the passenger or the pillion rider. The plurality of haptic units (102) may be deactivated for the passengers or pillion to save power and reduce battery consumption. In an embodiment, the mode of the vehicle (100) being an energy saving mode. Therefore, if the vehicle (100) is the energy saving mode, the plurality of haptic units (102) that are closest to the driver of the vehicle will be activated, thereby saving power and battery consumption. A passenger or a pillion rider are not necessarily required to feel the haptic feedback produced by the plurality of haptic units (102), in some cases they might want to opt out of such experience and ride a comfortable and quiet ride. For example, in an embodiment in a predefined location of pillion seat (110b), a plurality of haptic units (102) may be mounted. Therefore, as per the user's convenience, the plurality of haptic units (102) that are closer to the driver of the vehicle will only be the receiver of such haptic feedback and the one closer to the pillion (110b) will not be actuated. A mode change of the vehicle (100) may enable such a feature of the present invention.

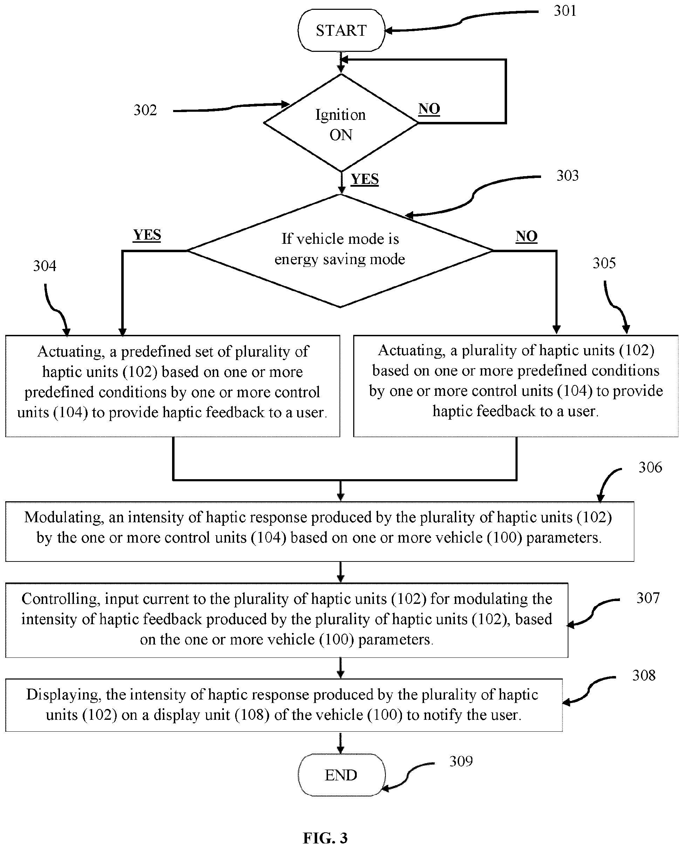

**Figure** 3 exemplarily illustrates a flowchart indicating a method of providing haptic feedback to a user of the vehicle (100) in accordance with an embodiment of the present disclosure.

The method initiates the process at step 301. At step 302, the method checks for ignition ON condition or key ON condition of the vehicle (100). If the condition is not true, the method moves back to step 301. The method does not move to step 303 until the ignition ON condition is satisfied. The method moves to step 303 when the vehicle is in ignition ON condition.

At step 304, the mode of the vehicle (100) is checked. If the mode of the vehicle is an energy saving mode, the method moves to step 304. At step 304, a first set of plurality of haptic units (102) are actuated based on one or more predefined conditions by one or more control units (104) to provide haptic feedback to a user.

If the mode of the vehicle is not an energy saving mode, the method moves to step 305. At step 305, a plurality of haptic units (102) are actuated based on one or more predefined conditions by one or more control units (104) to provide haptic feedback to a user is actuated. Once the plurality of haptic units (102) or first set of plurality of haptic units (102) are actuated, the method moves to step 306.

At step 306, an intensity of haptic response produced by the plurality of haptic units (102) is modulated by the one or more control units (104) based on one or more vehicle (100) parameters. The intensity of the haptic feedback of the plurality of haptic units (102) is modulated by the one or more control units (104) based on at least one parameter of the vehicle (100). The varying intensity based on the at least one parameter of the vehicle (100) enables the user to gauge the changes in that indicate the vehicle's (100) acceleration, deceleration, and performance. This feedback helps users make informed decisions about shifting gears, adjusting speed, and assessing the vehicle's (100) condition. The modulation of intensity of the haptic feedback of the plurality of haptic units (102) refers to the variation and change in the intensity or strength of tactile and haptic feedback. Such modulation of haptic feedback strength creates a more immersive and realistic experiences while operating a noiseless vehicle (100).

At step 307, input current to the plurality of haptic units (102) for modulating the intensity of haptic feedback produced by the plurality of haptic units (102) is controlled, based on the one or more vehicle (100) parameters.

At step 308, a display unit (108) is used to display the intensity of haptic response produced by the plurality of haptic units (102) on a display unit (108) of the vehicle (100) to notify the user. The plurality of haptic units (102) comprises at least one unbalanced motor. The one or more predefined conditions being at least an ignition ON condition of the vehicle (100), and an RPM of the vehicle (100) being more than zero, wherein the at least one parameter of the vehicle (100) being a speed of the vehicle (100).

The method terminates at step 309.

A person with ordinary skills in the art will appreciate that the systems, modules, and sub-modules have been illustrated and explained to serve as examples and should not be considered limiting in any manner. It will be further appreciated that the variants of the above disclosed system elements, modules, and other features and functions, or alternatives thereof, may be combined to create other different systems or applications.

The present claimed invention solves the technical problem of providing aid to individuals who rely on auditory and sensory cues to detect the presence and movement of vehicles. The present subject matter provides an alternative to engine noise that is absent from EVs/HEVs which can make them less noticeable and potentially increase the risk of accidents, especially in urban environments or during operation of the vehicle.

Advantageously, the present invention provides valuable feedback to users of the vehicle that indicate the vehicle's acceleration, deceleration, and overall performance. This feedback helps users make informed decisions about shifting gears, adjusting speed, and assessing the vehicle's condition. Additionally, in case of four-wheeler or multi-axle HEVs, due to the user of the vehicle being inside a closed cabin, the present invention provides feedback to ensure that the user is able to determine whether the vehicle is in ON state or OFF state. Such an absence in feedback regarding vehicle's ignition state, or the speed can cause anxiety in the user, creating additional distractions for them and degrading their driving experience. Furthermore, the present invention enables the user to easily determine accurately perceive the speed, since when the speed is less, and the vehicle is being driven slowly there are no natural excitations felt by the user.

Furthermore, the present invention gives a user of the vehicle a familiar haptic feedback which can give a more usual and familiar driving experience. Additionally, the present invention provides safety to users as the EVs and HEVs usually are very high in torque and a large amount of torque is available as soon as the ignition is turned on, therefore it becomes very difficult for the user to control the vehicle in the absence of feedback from the vehicle to the user. By providing such feedback, the user is safeguarded from such adverse situations.

Another object of the present subject matter is to provide users with auditory and sensory cues, thereby ensuring that the user does not have to rely more heavily on visual cues which can cause distractions to the user and make it difficult to maintain situational awareness on the road.

The present invention also solved the technical problems of providing users with an alternative to the hum or vibrations of an internal combustion engine, in turn giving them a calming or relaxing effect during driving. The presence of such haptic feedback in the noiseless vehicles provides better driving experience for those who found the engine noise soothing, potentially achieving a similar level of comfort during driving.

The present invention also solved the technical problems of ensuring that the user is made aware and confirm whether the vehicle has properly started or shut down. Therefore, this eliminates the need for the users to rely more on visual indicators, such as dashboard displays, to ensure the vehicle's ignition status. Such visual indicators, in turn lead to distracting the user's attention from the road and traffic, which might lead to adverse situations.

The present invention also solved the technical problems of providing haptic feedback to the users to accurately perceive the speed of the vehicle. The corresponding change in the haptic feedback system provides a sensory cue that correlates with the speed of the vehicle. Therefore, the users do not need to rely more on visual cues, such as speedometer readings or roadside landmarks, to gauge their speed accurately. Therefore, the risks of leaving the vehicle unattended with ignition turned on is eliminated, and similar and familiar feel of an idling engine is provided to serve as a reminder to turn off the vehicle before leaving, thereby potentially eliminating hazardous situations, the risk of battery depletion and reduced range of the vehicle.

In light of the above mentioned advantages and the technical advancements provided by the disclosed method and system, the claimed steps as discussed above are not routine, conventional, or well understood in the art, as the claimed steps enable the following solutions to the existing problems in conventional technologies. Further, the claimed steps clearly bring an improvement in the functioning of the configuration itself as the claimed steps provide a technical solution to a technical problem.

A description of an embodiment with several components in communication with another does not imply that all such components are required, On the contrary, a variety of optional components are described to illustrate the wide variety of possible embodiments of the invention.

Finally, the language used in the specification has been principally selected for readability and instructional purposes, and it may not have been selected to delineate or circumscribe the inventive subject matter and is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

While the present disclosure has been described with reference to certain embodiments, it will be understood by those skilled in the art that various changes may be made, and equivalents may be substituted without departing from the scope of the present disclosure. In addition, many modifications may be made to adapt a particular situation or material to the teachings of the present disclosure without departing from its scope. Therefore, it is intended that the present disclosure not be limited to the particular embodiment disclosed, but that the present disclosure will include all embodiments falling within the scope of the appended claims.

Further aspects if the invention include a haptic feedback system for a vehicle, a vehicle and a method of providing haptic feedback to a user of a vehicle through a haptic feedback system according to following clauses:
(1) A haptic feedback system (200) for a vehicle (100), the haptic feedback system (200) comprising:
   one or more control units (104); and
   a plurality of haptic units (102);
   wherein the one or more control units (104) being configured to actuate the plurality of haptic units (102) based on one or more predefined conditions to provide haptic feedback to a user,
   wherein an intensity of the haptic feedback of the plurality of haptic units (102) being modulated by the one or more control units (104) based on at least one parameter of the vehicle (100).
(2) The haptic feedback system (200) for the vehicle (100) of clause 1, wherein the plurality of haptic units (102) comprising at least one unbalanced motor.
(3) The haptic feedback system (200) for the vehicle (100) according to clause 1, wherein the one or more predefined conditions being at least an ignition ON condition of the vehicle (100), and a Revolutions Per Minute (RPM) of the vehicle (100) being more than zero, and wherein the at least one parameter of the vehicle (100) being a speed of the vehicle (100).
(4) The haptic feedback system (200) for the vehicle (100) according to clause 1, wherein the one or more control units (104) being configured to control input current to the plurality of haptic units (102) for modulating the intensity of haptic feedback produced by the plurality of haptic units (102), based on the at least one parameter of the vehicle (100), and wherein preferably the plurality of haptic units (102) comprising at least one unbalanced motor.
(5) The haptic feedback system (200) for the vehicle (100) according to clause 1, wherein the intensity of haptic feedback produced by the plurality of haptic units (102) being according to a non-linear function to the at least one parameter of the vehicle (100), wherein the non-linear function comprises an inverse parabolic function.
(6) A vehicle (100), the vehicle (100) comprising:
   a plurality of haptic units (102); wherein the plurality of haptic units (102) being mounted in a plurality of predefined locations (110) of the vehicle (100);
   a haptic feedback system (200); and
   wherein the haptic feedback system (200) comprising:
      one or more control units (104),
      wherein the one or more control units (104) being configured to actuate the plurality of haptic units (102) based on one or more predefined conditions to provide haptic feedback to a user,
      wherein an intensity of haptic feedback of the plurality of haptic units (102) being modulated by the one or more control units (104) based on at least one parameter of the vehicle (100).
(7) The vehicle (100) of clause 6, further comprises a display unit (108) wherein the display unit (108) being configured to display
   the intensity of haptic feedback produced by the plurality of haptic units (102), and
   the at least one parameter of the vehicle (100) to notify the user, and wherein preferably the plurality of haptic units (102) comprising at least one unbalanced motor.
(8) The vehicle (100) according to clause 6, wherein the plurality of predefined locations (110) being in direct contact with the user of the vehicle (100), wherein plurality of predefined locations (110) being at least a steering mechanism, a seat, a dashboard, a floorboard, one or more pedals, a handlebar with a pair of grip portions on at each ends of the handlebar, a steering wheel.
(9) The vehicle (100) according to clause 6, wherein a first set of plurality of haptic units being actuated based on a riding mode of the vehicle (100).
(10) The vehicle (100) according to clause 6, wherein a second set of the plurality of haptic units being deactivated based on a riding mode of the vehicle (100).
(11) The vehicle (100) according to clause 6, the first set of plurality of haptic units and the second set of plurality of haptic units being selected based on proximity of the plurality of haptic units (102) from a driver of the vehicle (100).
(12) The vehicle (100) according to clause 6, wherein the plurality of haptic units (102) comprising at least one unbalanced motor.
(13) The vehicle (100) according to clause 6, wherein the one or more predefined conditions being at least an ignition ON condition of the vehicle (100), and an Revolutions Per Minute (RPM) of the vehicle (100) being more than zero, wherein the at least one parameter of the vehicle (100) being a speed of the vehicle (100).
(14) The vehicle (100) according to clause 6, the one or more control units (104) being configured to control input current to the plurality of haptic units (102) for modulating the intensity of haptic feedback produced by the plurality of haptic units (102), based on the at least one parameter of the vehicle (100).
(15) The vehicle (100) according to clause 6, wherein the intensity of haptic feedback produced by the plurality of haptic units (102) being according to a non-linear function to the at least one parameter of the vehicle (100), wherein the non-linear function comprises an inverse parabolic function.
(16) A method of providing haptic feedback to a user of a vehicle (100) through a haptic feedback system (200), the method comprising the steps of:
   actuating, a plurality of haptic units (102) based on one or more predefined conditions by one or more control units (104) to provide haptic feedback to a user;
   modulating, an intensity of haptic feedback produced by the plurality of haptic units (102) by the one or more control units (104) based on at least one parameter of the vehicle (100), wherein the intensity of the haptic feedback produced by the plurality of haptic units (102) being according to a non-linear function to the at least one parameter of the vehicle (100), wherein the non-linear function comprises an inverse parabolic function; and
   controlling, input current to the plurality of haptic units (102) for modulating the intensity of haptic feedback produced by the plurality of haptic units (102), based on the at least one parameter of the vehicle (100).
(17) The method of providing the haptic feedback to the user of the vehicle (100) of clause 16, wherein the method comprising steps of displaying, on a display unit (108), the intensity of haptic feedback produced by the plurality of haptic units (102) and the at least one parameter of the vehicle (100) to notify the user, and wherein preferably the plurality of haptic units (102) comprising at least one unbalanced motor.
(18) The method of providing the haptic feedback to the user of the vehicle (100) according to clause 16, wherein the method comprising steps of:
   detecting, a riding mode of the vehicle (100) by the one or more control units (104);
   actuating, a first set of plurality of haptic units (102) based on the detection, wherein the first set of plurality of haptic units (102) being selected based on proximity of the plurality of haptic units (102) from a driver of the vehicle (100).
(19) The method of providing the haptic feedback to the user of the vehicle (100) according to clause 16, wherein the plurality of haptic units (102) comprising at least one unbalanced motor.
(20) The method of providing the haptic feedback to the user of the vehicle (100) according to clause 16, wherein the one or more predefined conditions being at least an ignition ON condition of the vehicle (100), and a Revolutions Per Minute (RPM) of the vehicle (100) being more than zero, wherein the at least one parameter of the vehicle (100) being a speed of the vehicle (100).

### Reference Numerals:

100 - vehicle
200 - Haptic feedback system
102 - Plurality of haptic units
104 - one or more control units
106 - Battery unit
108 - display unit
110 - predefined locations of the vehicle
110a - rider seat
110b - passenger or pillion seat
110c - dashboard
110d - handlebar with grips on each end of the handlebar
110e - floorboard

## Claims

1. A haptic feedback system (200) for a vehicle (100), the haptic feedback system (200) comprising:
one or more control units (104); and
a plurality of haptic units (102);
wherein the one or more control units (104) being configured to actuate the plurality of haptic units (102) based on one or more predefined conditions to provide haptic feedback to a user, wherein an intensity of the haptic feedback of the plurality of haptic units (102) being modulated by the one or more control units (104) based on at least one parameter of the vehicle (100).

2. The haptic feedback system (200) for the vehicle (100) as claimed in claim 1, wherein the one or more predefined conditions being at least an ignition ON condition of the vehicle (100), and a Revolutions Per Minute (RPM) of the vehicle (100) being more than zero, and wherein the at least one parameter of the vehicle (100) being a speed of the vehicle (100).

3. The haptic feedback system (200) for the vehicle (100) as claimed in claim 1, wherein the one or more control units (104) being configured to control input current to the plurality of haptic units (102) for modulating the intensity of haptic feedback produced by the plurality of haptic units (102), based on the at least one parameter of the vehicle (100); and wherein the plurality of haptic units (102) comprising at least one unbalanced motor.

4. The haptic feedback system (200) for the vehicle (100) as claimed in claim 1, wherein the intensity of haptic feedback produced by the plurality of haptic units (102) being according to a non-linear function to the at least one parameter of the vehicle (100), wherein the non-linear function comprises an inverse parabolic function.

5. A vehicle (100), the vehicle (100) comprising:
a plurality of haptic units (102); wherein the plurality of haptic units (102) being mounted in a plurality of predefined locations (110) of the vehicle (100);
a haptic feedback system (200); and
wherein the haptic feedback system (200) comprising:
one or more control units (104),
wherein the one or more control units (104) being configured to actuate the plurality of haptic units (102) based on one or more predefined conditions to provide haptic feedback to a user,
wherein an intensity of haptic feedback of the plurality of haptic units (102) being modulated by the one or more control units (104) based on at least one parameter of the vehicle (100).

6. The vehicle (100) as claimed in claim 5, further comprises a display unit (108) wherein the display unit (108) being configured to display
the intensity of haptic feedback produced by the plurality of haptic units (102), and
the at least one parameter of the vehicle (100) to notify the user; and
wherein the plurality of haptic units (102) comprising at least one unbalanced motor.

7. The vehicle (100) as claimed in claim 5, wherein the plurality of predefined locations (110) being in direct contact with the user of the vehicle (100), wherein plurality of predefined locations (110) being at least a steering mechanism, a seat, a dashboard, a floorboard, one or more pedals, a handlebar with a pair of grip portions on at each ends of the handlebar, a steering wheel.

8. The vehicle (100) as claimed in claim 5, wherein a first set of plurality of haptic units being actuated based on a riding mode of the vehicle (100); and wherein a second set of the plurality of haptic units being deactivated based on a riding mode of the vehicle (100).

9. The vehicle (100) as claimed in claim 8, the first set of plurality of haptic units and the second set of plurality of haptic units being selected based on proximity of the plurality of haptic units (102) from a driver of the vehicle (100).

10. The vehicle (100) as claimed in claim 5, wherein the one or more predefined conditions being at least an ignition ON condition of the vehicle (100), and a Revolutions Per Minute (RPM) of the vehicle (100) being more than zero, wherein the at least one parameter of the vehicle (100) being a speed of the vehicle (100).

11. The vehicle (100) as claimed in claim 5, wherein the one or more control units (104) being configured to control input current to the plurality of haptic units (102) for modulating the intensity of haptic feedback produced by the plurality of haptic units (102), based on the at least one parameter of the vehicle (100); and
wherein the intensity of haptic feedback produced by the plurality of haptic units (102) being according to a non-linear function to the at least one parameter of the vehicle (100), wherein the non-linear function comprises an inverse parabolic function.

12. A method of providing haptic feedback to a user of a vehicle (100) through a haptic feedback system (200), the method comprising the steps of:
actuating, a plurality of haptic units (102) based on one or more predefined conditions by one or more control units (104) to provide haptic feedback to a user;
modulating, an intensity of haptic feedback produced by the plurality of haptic units (102) by the one or more control units (104) based on at least one parameter of the vehicle (100), wherein the intensity of the haptic feedback produced by the plurality of haptic units (102) being according to a non-linear function to the at least one parameter of the vehicle (100),
wherein the non-linear function comprises an inverse parabolic function; and
controlling, input current to the plurality of haptic units (102) for modulating the intensity of haptic feedback produced by the plurality of haptic units (102), based on the at least one parameter of the vehicle (100).

13. The method of providing the haptic feedback to the user of the vehicle (100) as claimed in claim 12, wherein the method comprising steps of displaying, on a display unit (108), the intensity of haptic feedback produced by the plurality of haptic units (102) and the at least one parameter of the vehicle (100) to notify the user; and wherein the plurality of haptic units (102) comprising at least one unbalanced motor

14. The method of providing the haptic feedback to the user of the vehicle (100) as claimed in claim 12, wherein the method comprising steps of:
detecting, a riding mode of the vehicle (100) by the one or more control units (104);
actuating, a first set of plurality of haptic units (102) based on the detection, wherein the first set of plurality of haptic units (102) being selected based on proximity of the plurality of haptic units (102) from a driver of the vehicle (100).

15. The method of providing the haptic feedback to the user of the vehicle (100) as claimed in claim 12, wherein the one or more predefined conditions being at least an ignition ON condition of the vehicle (100), and a Revolutions Per Minute (RPM) of the vehicle (100) being more than zero, wherein the at least one parameter of the vehicle (100) being a speed of the vehicle (100).
